# EUROPEAN PATENT APPLICATION

(11) **EP 1 372 290 A1**
(43) Date of publication of application: **17.12.2003**
(21) Application number: 02360175.0
(22) Date of filing: 14.06.2002
(51) Int. Cl.: H04L 1/00

(54) **Method and system for selecting a modulation and coding scheme using trend analysis**

(71) Applicant: EVOLIUM S.A.S., 75008 Paris (FR)
(72) Inventor: Wilhelm, Michael, 71665 Vaihingen/Enz-3 (DE)
(74) Representative: KOHLER SCHMID + PARTNER

(57) **Abstract**

A method for selecting a modulation and coding scheme (MCS) including schemes comprising a plurality of coding schemes and at least one modulation scheme, which scheme (MCS) is to be applied to a downlink connection in a cellular radio system, the method comprising:
selecting from a table (MCS table) a MCS value on the basis of at least one measured radio link parameter; monitoring the at least one parameter, determining a trend of change of the at least one parameter, and modifying at least one MCS value in the table taking into account the determined trend.
By modifying MCS values in an existing MCS table, the table can be adapted to the existing radio conditions. Thus, the downlink throughput is increased.

## Description

The invention relates to a method for selecting a modulation and coding scheme (MCS), which schemes include a plurality of coding schemes and one or more modulation schemes, and the scheme (MCS) is to be applied to a downlink connection in a cellular radio system. In this specification, the term modulation and coding scheme (MCS) comprises systems with one modulation only (thus without any selection of a modulation) and systems with a plurality of modulations.

It is known to use tables which have fields each of which contains a MCS value. Each field is associated with one combination of values of radio link parameters, usually the meanBEP which is the mean bit error probability of a radio block for a certain radio link, and of the cvBEP which is the coefficient of variation of the bit error probability of a radio block.
The GSM (Global System for Mobile Communication) standard GPRS (General Packet Radio Service) [1] uses only one modulation, namely GMSK (Gaussian Minimum Shift Keying), and E-GPRS (Enhanced General Packet Radio Service) uses two modulations, GMSK and 8PSK (8 Phase Shift Keying). If two modulations are used, two tables (one for each modulation) are proposed to be used [1] by a link adaptation process in the radio access network to derive the next MCS.
The downlink connections in the cellular radio systems go from the BTS (base transceiver station) to user terminals which are normally MTs (mobile terminals), which term is used for the further description but shall include also non-mobile terminals having the same electronic construction as MTs but are not intended for mobile use. In the state of the art, the base transceiver station applies practically immediately to its downlink connection to a dedicated mobile terminal that MCS, the MCS value of which is in the table in that field which is indicated by the radio link parameters determined for the radio link connection to the just mentioned mobile terminal. If the radio link parameters change, an other field in the table is designated, and the BTS uses for the downlink connection the MCS value of the mentioned other field (which MCS value may be different or not from the former MCS value). According to the present standards, the radio link parameters are determined by the mobile terminals in a range of for example 0 to 7 for cvBEP, and for example in the range of 0 to 31 for meanBEP. Only integer values are determined for transmission to the BTS. The invention is also applicable if the parameter values are sent as fractional numbers, especially decimal fractional numbers.

The purpose of MCS tables is to have good downlink throughput. If the radio link connections are very good, it is possible to use a MCS providing a relatively high data rate and using relatively low error correcting capability. In contrast, if the radio link conditions are relatively bad, it is useful to use a high error correcting capability but providing a relatively low data rate, resulting to a downlink throughput smaller than in the first mentioned case but nevertheless as great as possible under the circumstances.
The MCS values in a MCS table have been set based on e.g. simulations and often do not correspond to the MCS values which would be the best ones in reality. Therefore, the downlink throughput does not reach the maximum possible value.

It is an object of the invention to increase the downlink (DL) throughput in a radio system, e.g. in a mobile system. This object is attained in a method as set forth in that the method comprises:
selecting from a table (MCS table) a MCS value on the basis of at least one measured radio link parameter;
monitoring the at least one parameter,
determining a trend of change of the at least one parameter,
and modifying at least one MCS value in the table taking into account the determined trend.

By modifying MCS values in an existing MCS table, the table can be adapted to the existing radio conditions. Thus, the downlink throughput is increased. The invention is described in connection with one BTS. A mobile system normally has many BTSs.

The method of the invention is preferably executed together with the known method of applying a MCS read from the mentioned table to a specific downlink connection as explained above. The invention works in parallel to this known method and monitors each individual MT, if it sends, following the first sent parameter values, the same values again or different parameter values designating a different field in the table. The number or percentage of the MTs which send parameter values requesting an other field and of such MTs which do not request an other field is detected, and when a relevant percentage requesting a certain other field is reached, the first MCS value is changed. In a variant of the invention, it is changed to the MCS value of the other requested field, if that field contains a MCS value different from that of the first mentioned field. Other principles of changing the MCS value are provided in addition or separately in other variants of the invention.

Since the behaviour of a number great enough for statistical purposes is observed, the requirement of a change to an other field by a great number of MTs can be regarded as an observed trend or tendency. This trend may in many cases indicate, in which manner the actual table will change its MCS values in the near future.

The inventive method may be executed, instead, without changing the table immediately or in short time intervalls.

A further advantage of the just described variation resides in the following: the MCS values of many fields in the table may have been changed compared with the original table from which the method has started e.g. early in the morning of a day, and the MCS values of the table or tables for one or more base transceiver stations in their current condition may be stored at special times (some times in normal working days and on non-working days, and in dependence of special events, e.g. sporting events). The invention provides a possibility for continuously or discontinuously determining the radio link conditions of the whole radio system and to store copies of actual MCS values or MCS tables for that conditions. The tables stored in such manner might be used when appropriate.

The invention, by changing individual MCS values within the table, allows to adapt the table to the present radio conditions at any required time, The adapted table normally corresponds much better to the radio conditions than a preset table, and thus the downlink throughput of the adapted table will be increased compared with the state of the art. Such increase is of interest both for the service provider and the mobile user. The downlink throughput is especially increased near the border of the geographic area covered by a base transceiver station (BTS) where the throughput losses are much higher than near the BTS.

This change of tables adapted by the invention can be made very quickly and, if wanted automatically or can be made by an operator by hand; also in the last mentioned case, the advantage of a very great number of possible MCS value combinations for the individual fields defined by at least one radio link parameter (usually two parameters) is present.

In addition to the invention the provider has also the possibility to fast load or set MCS selection tables for individual scenarios that reflect the user behaviour in the mobile network.

The data or parameter values (meanBEP, cvBEP) used in the example of the invention are already available in the link adaptation process as given e.g. by the GSM standard so that there is no extra communication to be implemented to get the relevant input for the trend analysis according to the invention and a derived adaptation of the MCS selection table. Also, there is no need to implement a complex link adaptation algorithm. A basic algorithm that selects the new MCS based on meanBEP and cvBEP is sufficient.

According to the different standards, the mobile terminals determine at short time intervals (e.g. about 0.5 seconds) the values of cvBEP and meanBEP and send them to the base transceiver station (BTS). For determining a trend of change of the MCS value to be used, according to the invention, such mentioned combinations of parameter values sent by the mobile terminals are in a preferred variation of the invention used in the following way: For each mobile terminal the combinations of the actual radio link parameters sent by that mobile terminal are compared with old parameter values, and counters for respective comparison results are incremented. Also other mobile terminals are observed by counting the sent combinations of parameter and only if and when e.g. within a predetermined time interval a relevant number or percentage of the observed mobile phones have sent the same deviating combination of parameters, a change of the MCS value would be useful and may be made .

Further features and advantages of the invention will be apparent from the following description of preferred embodiments of the invention in connection with the drawings which show features essential for the invention, and in connection with the claims. The individual features may be realised individually or in any combination in an embodiment of the invention.

In the drawings:
Fig. 1 is a representation of a part of a mobile system.
Fig. 2 is a flow chart of trend data acquisition.
Fig. 3 is a comparison of the distance related throughput [kbps]
Fig. 4 is a comparison of the distance related throughput loss [%] using trend analysis.

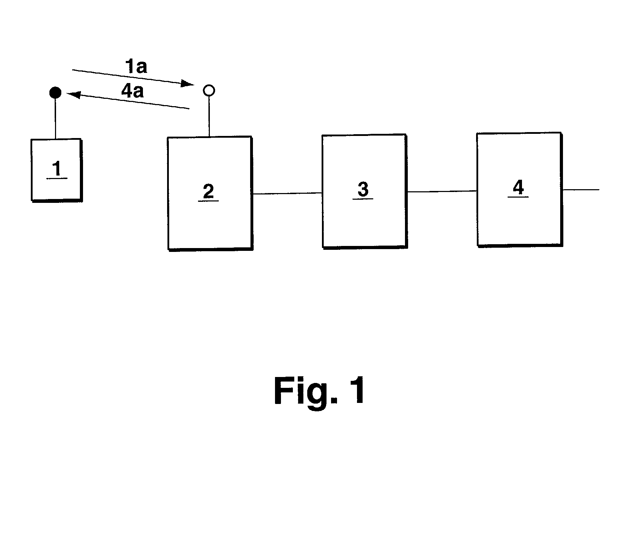

Fig. 1 presents the involved system components and shows a part of the mobile system.

From the GSM standard [1] it is known that the received signal quality shall be measured by the mobile terminal (MT) 1 to calculate the parameters meanBEP(value: 0 to 31) and cvBEP (value: 0 to 7). These values (based on the Bit error probability (BEP)) are to be provided/sent **1a** to a base transceiber station(BTS) **2** by all mobiles and are used in the mobile network e.g. in the packet control unit (PCU) **4** to select the modulation and coding schemes (MCS) from tables [1]. The new (selected) MCS will then be used to transmit DL data **4a.** The PCU 4 is coupled with the BTS 2 via a base station controller (BCS) 3. The units 2, 3, 4 form together the base station system (BSS).

The packet control unit (PCU) 4 covers besides other functions the link adaptation algorithms that access the MCS selection tables for GMSK and 8PSK transmission mode.
The link adaptation algorithms as well as the proposed trend analysis and MCS table adaptation process could also be located e.g. in the BTS.

Link adaptation algorithms are used to adapt the individual throughput to the channel conditions. System simulations show that the maximum throughput (table 1) can not be reached. The mean throughput losses are between about 12% and 15% ( other comment on simulation results of about 20%).

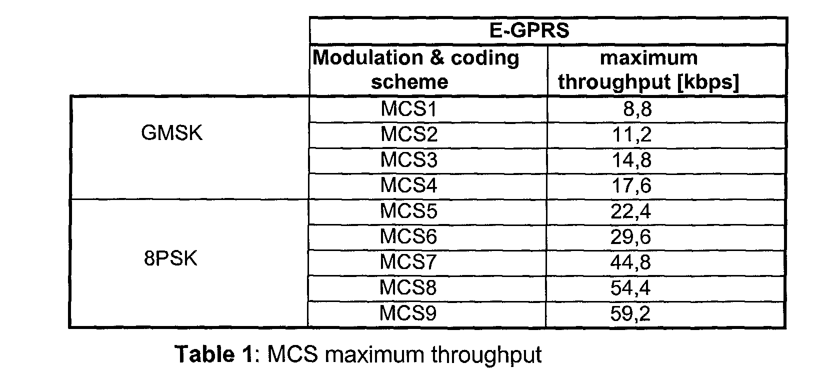

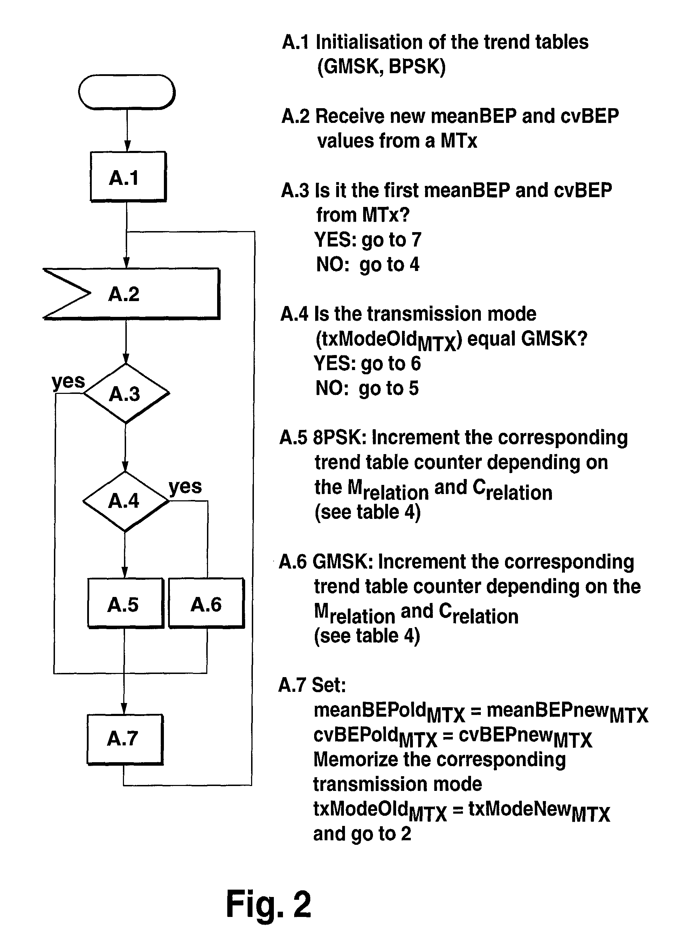

The principle to increase the downlink (DL) throughput is:
**a.** memorize the MCS table selection behaviour (see Fig. 2)
**b.** derive the selection trend and depending on the result of the individual table trend area (table 3) adapt the related MCS selection table element (table 2)

This is done in the PCU **4** because the advantage is that the implementation is very easy and information respectively data (parameters meanBEP, cvBEP) is already handled by the link adaptation process.

The link adaptation process may be located (instead in the PCU 4) in an other suitable unit, e.g. in the base transceiver station (BTS) 2 or in the BSC 3.

First of all a short presentation of MCS selection tables (table 2) [1], the required MCS selection trend tables (GMSK, 8PSK, table 3) and the relations are shown.

Table 2 has been developed by the inventive method during a certain period of time (about 1 hour in the example) starting from a usual MCS table (here called start table) The start table has in each line MCS values which are the same for all cvBEPs and depend only from the meanBEP. The MCS values for lines 1 to 5 (= for meanBEPs 1 to 5) is 1; the MCS value for lines 6 to 9 is 2; the MCS value for lines 10 to 21 is 3; the MCS value for lines 22 to 23 is 4; and the MCS value for lines 24 - 31 is 5 (the latter indicating switching to an other modulation). The higher the meanBEP, the better is normally the channel quality.

In table 2, e.g. for meanBEP = 5, cvBEP = 0 and 1, by the invention the original MCS value has been changed from 1 to 2, thus increased. For meanBEP = 6, cvBEP = 4 to 6, by the invention the original MCS value has been changed from 2 to 1, thus reduced.

Each element of table 2 e.g.: meanBEP = 21, cvBEP = 7 (currently set to MCS3) has a corresponding 3 x 3 matrix as given in table 3 (table trend area) with nine counters (LU, U, RU, L, E, R, LD, D, RD).

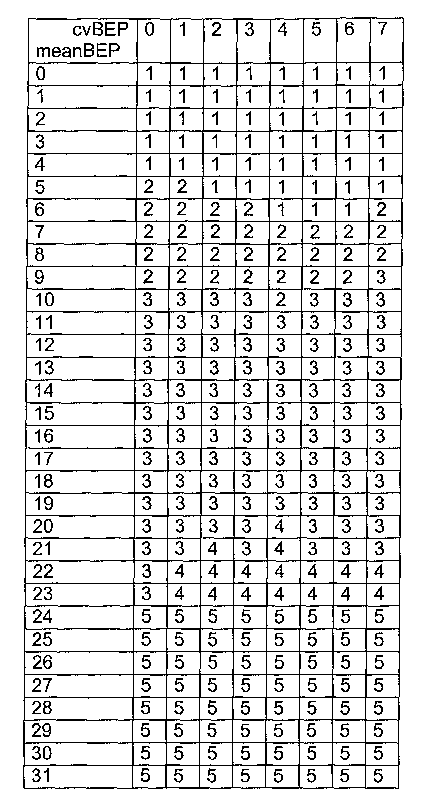

For example, in Table 2 a meanBEP = 21 and a cvBEP = 7 results in MCS = 3. The lower area covering meanBEP = 24 to 31 and cvBEP = 0 to 7 (all MCS being 5) indicates, that a change to an other modulation (in this example from GMSK to 8PSK) is to be made. For 8PSK another table is provided having MCS values for 8PSK, and having an area for switching to GMSK. This does not apply for GSM, but e.g. for E-GPRS. The last mentioned two tables may be regarded as one table for the special radio system, in contrast to other tables created by the inventive method.

Table 2 is used in conjunction with a basic link adaptation algorithm BASIC.

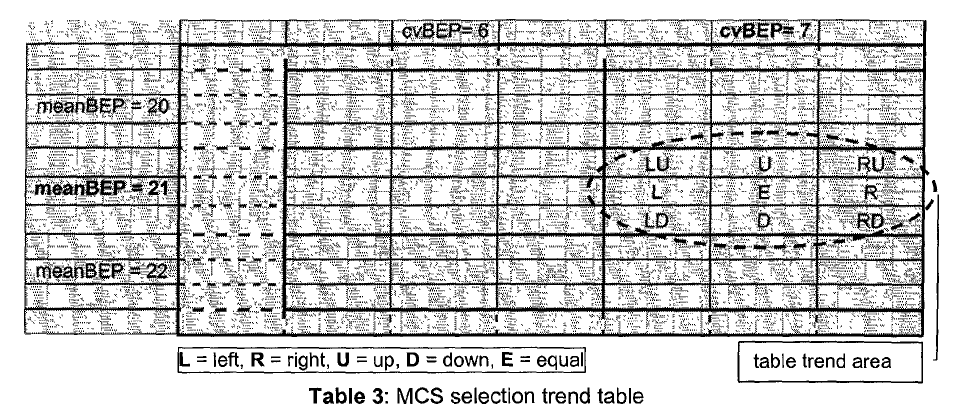

Furthermore the MCS table selection trend is stored in two tables depending on the transmission mode GMSK and 8PSK. Each table has a size of 96 x 24 elements (counters). The corresponding table element in the selection trend table is increase depending on the comparison of ***old BEP values*** (meanBEP**old**_{MT1}/ cvBEP**old**_{MT1}) with ***new BEP values*** (meanBEP**new**_{MT1}/ cvBEP**new**_{MT1}). Each counter is increased depending on the MT measurements values meanBEP and cvBEP as follows:

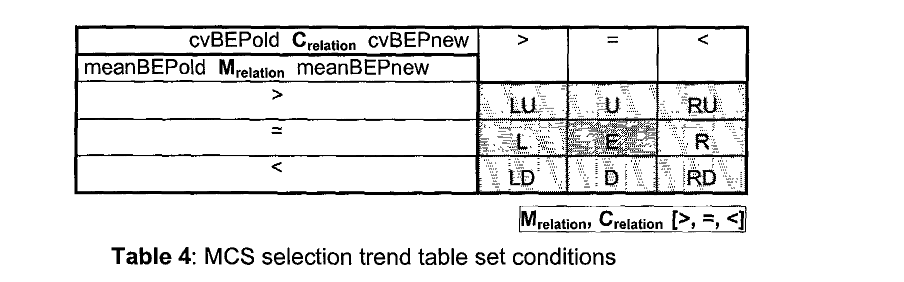

The trend table index is based on the old BEP values.

Fig. 2 shows the principle flow diagram of the trend data acquisition (algorithm A). The individual steps A.1 to A.7 which may be performed during analysis are also also shown in Fig. 2.
A.1 Initialisation of the trend tables (GMSK, 8PSK)
A.2 Receive new meanBEP and cvBEP values from a MTx
A.3 Is it the first meanBEP and cvBEP from MTx?
   YES: go to 7
   NO: go to 4
A.4 Is the transmission mode (txModeOld_{MTx}) equal GMSK?
   YES: go to 6
   NO: go to 5
A.5 8PSK: Increment the corresponding trend table counter depending on the **M**_{**relation**} and **C**_{**relation**}(see table 4)
A.6 GMSK: Increment the corresponding trend table counter depending on the **M**_{**relation**} and **C**_{**relation**}(see table 4)
A.7 Set: meanBEPold_{MTx} = meanBEPnew_{MTx}
   cvBEPold_{MTx} = cvBEPnew_{MTx}
   Memorise the corresponding transmission mode txModeOld_{MTx} = txModeNew_{MTx}
   and go to 2

A device performing these steps is arranged in the PCU 4 (Fig. 1).

The following exemplifies how trend analysis and MCS selection table adaptation can be used to increase the system throughput. This process can be done ONLINE (automatically) to automate and OFFLINE e.g. via OMC (the Operating and Maintainance Centre) by the operator.

In the following description only one relation i.e. one MCS selection table element (from table 2) and a corresponding MCS selection trend table area shown in Table 5 are take into consideration to demonstrate the algorithm. Table 5 shows nine counters from table 3. The steps to be performed are:

**Table 5:**

| MCS selection trend table area | | |
|---|---|---|
| LU | U | RU |
| L | E | R |
| LD | D | RD |

B.1. Build the sum of the nine counters (table 5) and
B.2. determine the percentage of each counter.
B.3 Depending on the strategy (e.g. taking a threshold into account) the corresponding MCS selection table element (table 2) is set according to the counter with the highest percentage. If e.g. the LD counter value presents 75% of the overall area which indicates a trend to a higher MCS the corresponding MCS selection table element in table 2 should be changed.

Again it depends on the strategy how to adapt the current MCS of the table element (table 2). Methods to set the MCS of the corresponding table element could be:
just increase or decrease by one, two, etc. depending on e.g. percentage value and the counter that gives implicit the direction (+,-)
set to the same value of the nearest (or next but one) element e.g. left down (LD) in the example above (change MCS 3 to MCS 4)
etc.

An MCS changing process proceeds in an example in the following way: A MT, when is was just switched on, sends BEP parameters, e.g. meanBEP = 21, cvBEP = 7, which corresponds in table 2 to a MCS value 3. This MCS value is now used by the MT. The next time this MT might send BEP parameters indicating a field in table 2 which field is that immediately below (compare Table 2) of the field originally designated and designate a MCS value higher by 1 (namely 4). A number of MTs which have originally designated the first mentioned field, is observed if the "remain" in said field or require change to an other field. If the number or percentage of the MTs requiring change of the field is regarded to be high enough, say it is greater than 80%, then the MCS value of the first mentioned field is changed according to a rule set previously. In one modification of the invention, the MCS value in the mentioned field is changed to that MCS value which is in the other field which is designated by the parameter values requiring a change. It is assumed in this example, that 80 % of the MTs required a change to field for meanBEP = 22, cvBEP = 7 (MCS = 4). In this case the MCS value of the first mentioned field will be made the same as in the mentioned field for meanBEP = 22, namely 4. The next MTs sending parameter values which designate the first mentioned field (the MCS value was just changed to the value 4) will be served with a MCS according to this new, increased MCS value. Most probably, this MCS will fit the reqirements of these MTs. Therefore, these MTs get earlier a good downlink connection than without the invention, and thus the downlink througput of the system is increased.

In case the ONLINE (automatic) variant is used this process could be triggered e.g. by an operator, a timer and/or trend counter value(s) reached.

Furthermore a special region called switching area shown in table 2 (the same, but located at the top of the table, exists for 8PSK that allows switching from 8PSK to GMSK) could be initialized with different MCS values. To handle the areas for both GMSK and 8PSK
- one could use a different adaptation strategy e.g. if possible to decrease switching from 8PSK to GMSK and increase switching from GMSK to 8PSK to get profit from the MCSs with a higher throughput
- one could adapt the switching area size

Simulations executed with a basic adaptation algorithm BASIC show that the mean throughput loss can be reduced from 14.2 kbps to 11.4 kbps in a dense urban scenario with a mobile speed of 3 km/h and from 12.1 kbps to 6.3 kbps in a residential scenario with a mobile speed of 50 km/h in relation to an ideal algorithm IDEAL.

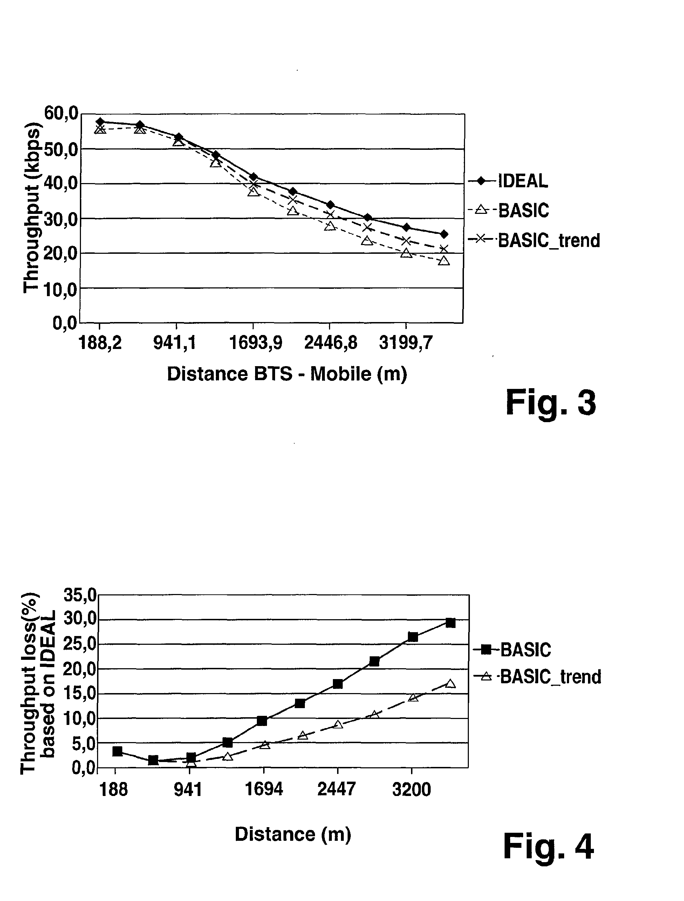

The following Fig. 3 and 4 show the throughput gain respectively loss reduction of the BASIC algorithm regarding the distance in the residential scenario. The curve BASIC represents the case using optimized MCS selection tables for cell level simulation and BASIC_trend demonstrates the gain using adapted MCS tables. The IDEAL algorithm is used as reference. It is obvious that the throughput gain (about 12%) is greater at the cell border than near the base station (Fig. 4).
- It is possible according to a variant of the invention to adapt only some MCS selection table elements which might have in the corresponding trend areas counter values much higher than others (selective adaptation). This strategy could speed up the adaptation process

The term table as used herein is intended to include any means able to store and retrieve data, e.g. usual tables which have numbers inserted in table fields, or e.g. counters the actual counts of which are the interesting values, e.g. MCS values.

The invention is applicable for other radio systems than mentioned above, e.g. for HSDPA (High Speed Downlink Packet Access).

### Reference

[1] GSM 0508 "3GPP TS 05.08 V8.13.0 (2002-02)", "Radio subsystem link control"

## Claims

1. A method for selecting a modulation and coding scheme (MCS) including schemes comprising a plurality of coding schemes and at least one modulation scheme, which scheme (MCS) is to be applied to a downlink connection in a cellular radio system, the method comprising:
selecting from a table (MCS table) a MCS value on the basis of at least one measured radio link parameter;
monitoring the at least one parameter,
determining a trend of change of the at least one parameter,
and modifying at least one MCS value in the table taking into account the determined trend.

2. A method according to claim 1, wherein the MCS table comprises a plurality of fields, each field being defined by the at least one parameter, the method further comprising:
providing for each field a counter field which is subdivided in a plurality of counters or counter subfields including a central counter subfield, in the case that a MT (mobile terminal) after having sent radio link parameters the first time, sends the next time radio link parameters, determining if or if not the newly sent parameters are the same as previously sent, and in the affirmative increasing a count of the central counter subfield, in the negative increasing a count of that non central subfield, which is indicated by the direction in which the newly sent parameters distinguish from the parameters previously sent, and if in a relevant number of cases the monitored at least one parameter for a special field of the MCS table s positioned in a subfield which is not central in the counter field but positioned in a direction towards a neighboring counter field, determining that a change of the MCS is to be made, e.g. to that MCS allotted to said neighboring counter field.

3. A method according to claim 1, wherein a change of a MCS value is made according to at least on of the following rules:
change by at least one, depending on a percentage value and of the the direction (+/-) of change indicated by the counter;
set to the same value of one of the nearest elements;
set to the same value of one of the nearest elements.

4. A method according to claim 1, wherein the at least one parameter is a bit error probablility (BEP) value.

5. A method according to claim 1, wherein the at least one parameter comprises at least two bit error probablility (BEP) values (meanBEP, cvBEP), further comprising the steps of:
a) evaluating the current parameter values,
b) comparing the current parameter values coordinated to a certain table field with older parameter values coordinated to the same certain table field,
wherein the steps a) and b) are performed for N times (N > 1), dependent on differences occurring between current and older parameter values arecounted, and dependent on counting results modifying the certain table field is performed.

6. A base station system (BSS) (2+3+4) suited for a radio system, wherein the base station system is arranged for performing the method of claim 1.

7. A base station controller (BSC) adapted for performing the method of claim 1.

8. A mobile communication system adapted for performing the method of claim 1.

9. A mobile terminal suited for a communication system according to claim 8, the mobile terminal being arranged for continuously, including at different times, sending the at least one parameter.
